# EUROPEAN PATENT SPECIFICATION

(11) **EP 2 168 890 B1**
(45) Date of publication and mention of the grant of the patent: **02.01.2013**
(21) Application number: 08787610.8
(22) Date of filing: 13.06.2008
(51) Int. Cl.: B65G 17/08, B65G 45/10

(54) **CONVEYOR BELT FOR FOOD PRODUCTS OR SIMILAR**
FÖRDERBAND FÜR LEBENSMITTELPRODUKTE ODER ÄHNLICHES
CHAÎNE DE TRANSPORT POUR PRODUITS ALIMENTAIRES ET PRODUITS SIMILAIRES

(30) Priority: 14.06.2007 ES 200701646
(43) Date of publication of application: 31.03.2010
(73) Proprietor: San Miguel Zarzuela, Angel Carmelo, 47012 Valladolid (ES)
(72) Inventor: SAN MIGUEL NUNEZ, Javier, 47012 Valladolid (ES)
(74) Representative: Temino Ceniceros, Ignacio
(86) International application number: PCT/ES2008/000429
(87) International publication number: WO 2008/152171

(56) References cited:
- DE-A1- 2 150 777
- DE-A1- 2 150 777
- DE-A1- 10 065 092
- DE-U1- 8 014 546
- DE-U1-202006 008 006
- GB-A- 1 320 303
- GB-A- 1 494 138
- US-A- 2 766 635
- US-A- 3 262 549
- US-A- 4 981 210

## Description

This invention relates to a conveyor chain that is specially designed for food or similar products and more specifically designed to provide optimum results from a hygiene perspective, ensuring ease of cleaning and even an auto-clean function that additionally enables to transport products in bulk, specifically the transport of granular or dust producing products deposited directly over the chain without it affecting its proper operation.

### INVENTION BACKGROUND

Conveyor chains, whose modules or links incorporate joint male-female coupling devices at their complementing edges exist; specifically channels that substantially overextend the semi-cylinder and cylinders that are fitted to these channels and are topped by radial partitions that mesh with the groove openings.

On the other hand, these channels are indispensable in order for the chains to perform direct or reverse turns. Therefore, one of the biggest problems is the cleaning of these channels since they could block the chain movement and thus impede their operation.

Cleaning of the joints is another big problem associated to all of them since access between the channels and the cylinders that are fitted to them is not viable.

In this sense, Patents US 853129 and GB 1494138, the latter disclosing a chain according to the preamble of claim 1, fit the configuration mentioned above and therefore the cleaning of their channels and their joints can be a big problem because they would be extremely difficult to clean, which makes their use not adequate for transporting food products where a tendency for spreading germs and other types of organisms exists. Similarly, none of these documents describes a plastic modular band with reverse turns than enables to carry out the applications incorporated by the present invention.

Patent GB 831327 shows a different chain that maintains the lateral slide coupling system but in addition to the above mentioned cleaning problems, they would not be adequate for bands with a load since this type of band would disassemble itself and run the added risk when used with the above mentioned bulk products; in other words, granulated or dust type products, these would tend to dirty the inside of the joints and may end up blocking the chain ad impeding the tilting movement between links.

Documents GB 1320303 and US4981210 describe the most recent background of this invention. However, before the analysis, we must consider the importance of the reverse turn in plastic modular bands such as the one described in this invention.

Reverse turns are always required and for multiple reasons in plastic modular bands among others, to tighten the traction gears, for elevation applications, etc., as described in many other conventional conveyor patents where a modular band is driven by gears and requires using the maximum number of teeth for proper operation. Tensors are used for this purpose, which are normally provided by the weight of the band, forming catenaries (nttp://www.eurobelt.com/ing/ntrah.html) and/or even by special gravity tensors (http://www.eurobelt.com/ing/ntyc.html). Reverse turn areas occur at contact areas between the modular band and the return rollers.

We must also consider that a plastic modular band does not operate like a conventional transmission belt or like a rubber or PVC band; since it's made of plastic, it is subjected to dilations and/or contractions, which makes it impossible to provide a fixed and straight line tension at the return in order to obtain an effective enough tension of the gears and also, it can not provide a constant tension since this tension continuously varies with the working conditions.

Reverse turns enable to provide vertical as well as horizontal transportation since as is evident, reverse turn inflexions are required for vertical transport operation (see hftp://www.eurobeit.com/ing/ntrae.html where the reverse turn areas are precisely the changeover areas between the horizontal band and the vertical elevation, which are indicated as turn radiuses). Similarly, if a minimum transference distance between bands is desired, where the band traction motor must be placed on the lower side of the conveyor, a reverse turn area is required because without this turn, the separation length between bands would not be viable.

Document GB 1320303 describes a conveyor chain formed by identical links, which are joined together using a male-female coupling embodied by the transversal belt. The female coupling is a cylindrical groove with a narrow bottleneck opening, while the male coupling device is a cylindrical segment. An upper notch is formed between the cylindrical segment of the male coupling and the link body, which is where the female element of the attached link meshes; so this part of the female coupling is permanently inside the notch during any angular position between links thus preventing dirt from entering the notch. The links have a large groove on their underside, which may be used as a pulling means by the corresponding gears.

The solution provided by this document implies that the joint is always closed for its cleaning. In other words, when the joint turns, normally it is inevitable that the link that is in the reverse turn is closed, precisely to prevent the transported product from entering; therefore, the presence of a dirt tank (which is not provided) is required so that with a simple transversal cleaning of the band with water or air is enough to eliminate the dirt and prevent any blockage. A solution has not been previously provided for the fundamental technical problem of eliminating dirt when the joint performs the reverse turn which is essential for preventing blockage; the proposed invention provides a satisfactory solution for this problem.

The technical problem derived from the previous document is the incorporation of an auto-cleaning mechanism that acts during the relative swinging motion between links as well as a dirt accumulation tank so that this dirt does not affect the rotation and proper operation of the conveyor chain, preferably granulated or dust based products that can be eliminated by using simple cleaning systems that use compressed air, water under pressure, etc., in such a way so that the dirt can be removed from the tank and from the inside and lower side of the joints.

Document US 4 981 210 describes a conveyor chain comprised of identical links hinge-joined to each other where the external surface of the male coupling acts as a scraper of the female coupling surface during the relative swinging motion between links.

However, this document does not completely solve the above mentioned technical problem since it does not provide cleaning of the turn axis, which in male-female connections is a cavity that tends to accumulate dirt. Therefore, while for granulated products, the male-female coupling is sufficient for preventing product from entering the turn axis, this is not true for dust producing products. In the above mentioned document US 4 981 210, during its normal and daily usage, the coupling will tend to wear from the rubbing and scrapping and will become more and more imperfect and will not be effective in preventing dirt from accumulating inside the turn axis between the male and female pieces and the dust product will then begin to cake and with time, it will impede the proper rotation of the chain. See, for example reference 7 in figure 5 of the above mentioned patent since it is at this point where dirt accumulates preventing the chain from turning properly.

The solution presented in this patent is not valid for a plastic modular band because it is not able to operate in reverse turn, which prevents it from performing a wide range of uses as mentioned before. Regarding cleaning, since it does not incorporate reverse turns, the dirt accumulated inside the joints will never be able to be extracted as is desired.

Therefore, in order to optimize the auto-cleaning, perform a cleaning of the external as well as the internal turn surface is required in order to prevent the blocking of the belt caused by accumulated caked dirt and enabling in the reverse turn areas of the conveyor return to include simple cleaning systems that use compressed air, water under pressure, etc., to remove dirt, and which none of the mentioned documents provides a solution for.

### DESCRIPTION OF THE INVENTION

The conveyor chain proposed by this invention has been designed and structured in order to completely resolve the above mentioned problem, ensuring optimum conditions of cleanliness when used for its primary purpose of transporting food and similar products, where good hygiene is essential.

The specific chain that is recommended, which is of the type comprised of a plurality of links hinge-joined to each other using male-female coupling devices that allow for a certain swinging motion angle between them with these links attachable by means of transversal slides, centres its characteristics on the fact that while the female coupling device as is the standard, consists in a cylindrical groove with a narrow bottleneck opening; in other words, a groove shaped like a cylindrical segment; the male coupling device, instead of a cylindrical element, consists of a cylindrical segment that incorporates several protruding edges that act as scrapers during the relative swinging movement between links, which creates an auto cleaning effect during the chains movement.

Additionally, an arched upper notch exists between the male element of a link and its body where the corresponding part of the adjacent link's female element meshes, in a way that seals these two elements and specifically enables the female element to maintain the opening of the groove corresponding to the male element on the upper face of the chain closed at any position between chain links during its operation in order to prevent granulated or dust producing products from enter this notch during their transportation in bulk. The relative dimensions between this arched upper notch and the adjacent link part that meshes inside, enables to achieve an angle that is contrary to normal operation of the chain in order to perform the auto-cleaning of these links performing a wider relative turn by using a deflector roller located below the chain; specifically below the reverse moving section of the chain. Additionally, and with the purpose of preventing the possible blocking of the band during its reverse turn and facilitate its cleaning, it also incorporates an enlarged notch on its upper groove so the female element corresponding to the adjacent link acts as an expeller of dirt or accumulated product towards this groove and in this way ensures the proper turning and operation of the conveyor belt.

The male element of the hinged section between links adopts a shape that is close to a semi-circle, so that two protruding edges that act as a scraper can be housed inside; it is possible to make this male element shaped like a cylinder that incorporates several longitudinal notches or scrapes that have multiple protruding edges, which act as a scraper over the female element's surface.

The links can all be the same with each of them incorporating a female hinged element on one of its ends and a male element on its other end, or two different types of links may exist; one that incorporates the two female elements and another that incorporates the two male ones; in which case, these two types of links must be inter-coupled in alternating order.

Lastly and in accordance with a different characteristic of this invention, provisions have been made so the pulling devices for the chain using the corresponding gear, on the bottom side with the female coupling of the adjacent link, establishes lower notches or grooves that at least open during the straight line trajectory between links with the purpose of facilitating the cleaning of the channels as well as preventing the blocking of the chain during its direct turn because of possible accumulated dirt.

In accordance with the invention, the described technical problems are resolved, which facilitate that, when the conveyor returns at reverse turn areas and thanks to its auto-cleaning system, simple cleaning systems may be included such as compressed air or water for extracting the dirt from the tank, from inside the joint and from that bottom area.

### DESCRIPTION OF THE DRAWINGS

To complement the description that is being carried out and for the purpose of better understanding the characteristics of the invention, in accordance with a preferred example for carrying it out in a practical way, a set of drawings are provided along with their description, which represent the following in an illustrative but not a limiting fashion:
Figure 1. - Shows a partial side view of a conveyor chain used for food and similar products that is designed in accordance with the objective of this invention.
Figure 2. - shows a view similar to figure 1, corresponding to a different embodiment for chain links that affects the driving mechanism for those links.
Figure 3. - Shows another view similar to figure 1, with a different male joint element configuration.
Figure 4. - Again shows another view similar to figure 1, but corresponding to a conveyor chain that uses two different types of links.

### PREFERRED EMBODIMENT OF THE INVENTION

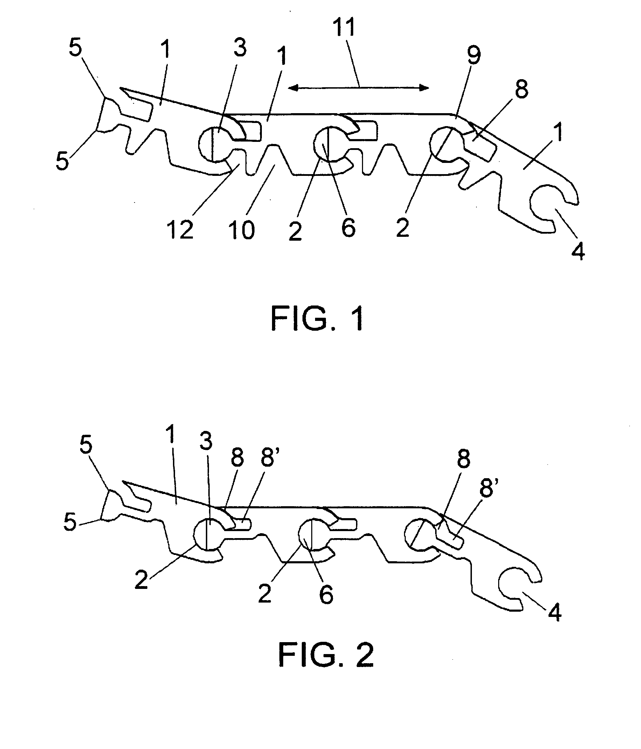

In accordance with the listed figures and in particular figure 1, we can see how the conveyor chain that is recommended, as in any conventional conveyor chain of this type, incorporates a series of links (1) that incorporate a female coupling device (2) on one of its ends and a male coupling device (3) on the opposite end; with the female coupling device (2) consisting in a wide cylindrical groove with a narrow bottleneck (4) opening used for transversely retaining the male coupling device (3) that must turn inside it.

Well then, in accordance with this invention, the element or male coupling device (3) instead of adopting a formal cylindrical configuration and dimensionally coinciding with that of the groove (2), it adopts the configuration of a cylindrical segment as shown in figure 1, which incorporates a set of protruding edges (5), which is a structure that achieves two objectives: On one hand, it creates a chamber (6) opening for cleaning on the hinge and on the other hand, during the turn or relative swinging motion between links (1), the protruding edges (5) act as scrapers or extractors of dirt that has built up at the bottom of the groove (2) decompressing the residues and facilitating the cleaning.

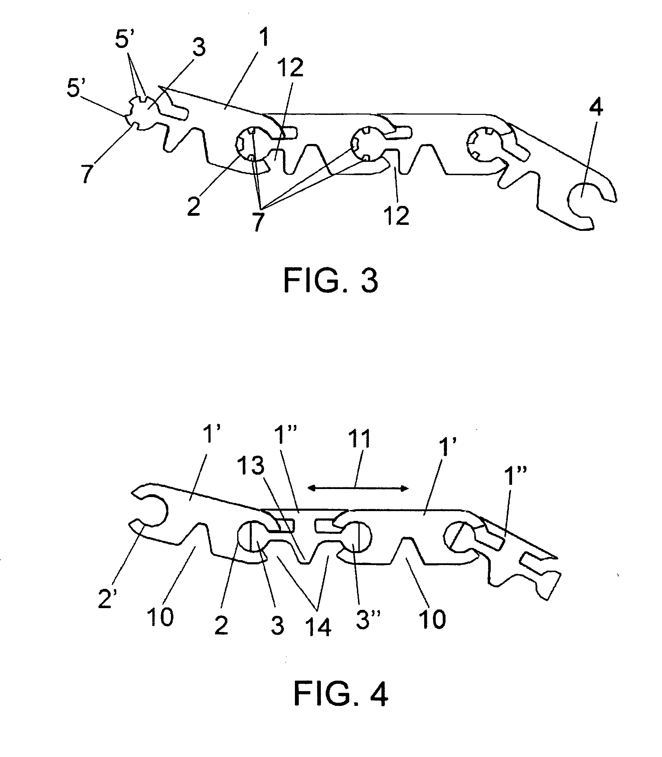

Sharp edges (5) can be added as shown in figure 3 so the male coupling device (3) can basically be cylindrical with various longitudinal grooves (7) that incorporate multiple protruding edges (5') with the same scraping, removing or decompressing function.

Corresponding with the male coupling device (3) of each link (1), the arched notch (8) is located where the partition (9) meshes, which comprises part of the female coupling device (2), where a perfect adjustment exists between the elements so that the notch (8) becomes a chamber that is permanently kept closed as shown in the middle and right areas of figure 1 during the normal operation of the chain, preventing granulated or dust producing products, which have been deposited over the chain, or any other similar product from entering inside this notch and allowing an angle to be formed in the opposite direction of the chain as shown in the left hand side of figure 1, forcing the arched partition (9) to penetrate to the bottom of the notch (8) performing a complete scraping of the notch walls in a swinging motion in the opposite direction of the link (1) produced by the chain return phase; in other words, during its lower and non-operational cycle with the aid of one or more deflector rollers.

Cleaning of this area can be substantially improved if this notch (8) is projected in a straight section (8') as viewed in the figures, which show in detail how the chamber located between adjacent links level with this notch (8) is considerably enlarged, causing the female element (9) to displace the possible dirt to the straight section (8') and ensuring in this way the turning of the links and the chain operation.

As for everything else, and for driving the chain by means of the corresponding pinion or sprocket, each link incorporates a groove (10) on its lower face as shown in figures 1 and 3 that have an isosceles trapezoidal configuration that enables to interlock the corresponding tooth and enables to pull the chain in any direction as shown by the double arrow (11) in figure 1; but when only one direction is designed for the chain, in accordance with arrow (11') in figure 2, the notch or groove (10) can be completely open towards the same direction as the chain movement causing a wide opening (12) that extends up to the male coupling element (3), which makes the interior face of the chain much more accessible for cleaning.

The only thing left to highlight as shown in figure 4 is that the links can be two types instead of being all the same as in the examples of figures 1 to 3. Specifically in the example of figure 4, a first type of link (1') appears that incorporates two female coupling grooves (2-2') and another groove (10) on the centre of its lower side for the traction or pulling pinion or sprocket teeth, while the second type of link (1") lacks female couplings and incorporates two male coupling devices (3-3"), and can be either one of the types shown in figure 1, as also shown in figure 4 or of the type shown in figure 3 without this affecting the performance of the invention.

These links (1") with two male coupling elements (3") incorporate an isosceles trapezoidal appendix (13) on its lower side, which leaves completely open spaces (14) at both its sides for cleaning, which can be triggered via any of its sides with the driving sprocket or pinion teeth, which also achieves a bidirectional movement (11) of the chain as is the case in figure 1.

## Claims

1. Conveyor chain for food and similar products that require optimum cleanliness conditions in order to prevent the proliferation of bacteria and other micro-organisms, of the type comprised of numerous links hinge-joined together using male-female coupling devices that allow for a certain tilt angle between links and their direct coupling via a transversal slide, while also providing an upper notch (8') between the link's male coupling and its body (1) where the corresponding female coupling element (9) meshes, belonging to the adjacent link with the particularity that this arched notch (8) is topped with a sector (8') not accessible to the before mentioned female element, which forms a variable volume chamber with it on the chain hinge, which is accessible to the dirt that may be dragged by the female element, particularly during the chain's inverted turn, with the driving of the chain using the corresponding gears causing a wide lower groove (12) with the female element of the adjacent link, which at least opens during the lineal trajectory of said links, wherein while the female coupling device consists in a cylindrical groove (2) with a narrow bottleneck opening, the male coupling device consists in a cylindrical segment (3-3'-3"), **characterized in that** the cylindrical segment (3-3'-3") incorporates protruding edges (5, 5') inside the complementary groove, which creates a chamber (6) opening for cleaning on the hinge and on the other hand, during the turn or relative swinging motion between links (1), the protruding edges (5, 5') act as scrapers or extractors of dirt that has built up at the bottom of the groove (2) decompressing the residues and facilitating the cleaning of this groove (2),

2. Conveyor chain for food and similar products in accordance with claim 1, **characterized in that** the male element (3) on the joint between links adopts a shape that is almost a semi-circle that includes two protruding edges used as scrapers.

3. Conveyor chain for food and similar products in accordance with claim 1, **characterized in that** the male element (3) on the hinge between links adopts a basically cylindrical shape that incorporates longitudinal grooves or notches (7) that include multiple protruding edges used to scrape the bottom or surface of the female element.

4. Conveyor chain for food and similar products in accordance with claims 1 and 2 or 3, **characterized in that** it incorporates two types of links (1'-1"), one with two female hinge elements and the other one with two male hinge elements arranged in alternating fashion.

5. Conveyor chain for food and similar products in accordance with any of the prior claims, **characterized in that** the female element sector (9) of each link (1), that meshes with the arched shaped upper notch (8) of the adjacent link remains permanently inside this notch, in any position between chain links during its normal operation, maintaining its narrow entrance closed in order to prevent granulated or dust producing products in bulk from entering, and allowing the angle between links to be opposite the normal operation of the chain in order to facilitate the cleaning of these links aided by a deflector roller during the reverse motion of the chain.

6. Conveyor chain for food and similar products in accordance with any of the prior claims, **characterized in that** an arched upper notch (8) where the corresponding part of the female element (9) belonging to the adjacent link meshes against, with the particularity that during normal operation of the chain, the female element maintains its narrow entrance (8) corresponding to the complementary male element on the upper face of the chain closed in order to prevent granulated or dust producing products in bulk from entering and allowing the angle between links to be opposite the normal operation of the chain in order to facilitate the cleaning of these links, aided by a deflector roller during the reverse operation of the chain.

## Patentansprüche

1. Transportkette für Lebensmittel oder Ähnliches, die optimale Reinigungsbedingungen benötigen, um das Wachstum von Bakterien und anderen Mikroorganismen zu verhindern, der Art, die aus einer Reihe durch Steckkupplungsmittel gelenkig untereinander verbundener Kettenglieder bestehen, die einen gewissen Schwenkwinkel zwischen den Kettengliedern und die direkte Kupplung dieser Kettenglieder über einen Querschieber ermöglichen, während auch eine obere Rille (8') zwischen der Steckkupplung des Kettenglieds und des Körpers (1) vorhanden ist, in der das entsprechende Aufnahmeelement der Kupplung (9), das zum angrenzenden Kettenglied gehört eingepasst ist, mit der Besonderheit, dass diese bogenförmige Rille (8) in einem Bereich (8') endet, zu dem das oben genannte Aufnahmeelement keinen Zugang hat, das mit diesem Bereich eine Kammer mit veränderbarer Volumetrie in dem Kettengelenk bildet, in die der Schmutz eintreten kann, den das Aufnahmeelement mitführen kann, insbesondere bei der umgekehrten Drehung der Kette, wobei die Mitnahmemittel durch die entsprechende Einpassung eine breite untere Auskehlung (12) festlegt, mit dem Aufnahmeelement des benachbarten Kettenglieds, das sich zumindest bei der geradlinigen Bewegung dieser Kettenglieder öffnet, in der das Aufnahmekupplungsmittel aus einer zylinderförmigen Auskehlung (2) mit verengter Mündung besteht, wohingegen das Steckkupplungsmittel aus einem zylinderförmigen Abschnitt (3-3'-3") besteht, **dadurch gekennzeichnet, dass** der zylinderförmige Abschnitt (3-3'-3") scharfe Kanten (5, 5') im Inneren der komplementären Auskehlung aufweist, was eine Kammer (6) mit einer Öffnung für die Reinigung schafft, während auf der anderen Seite bei der Dreh- oder Schwenkbewegung zwischen den Kettengliedern (1) die scharfen Kanten (5, 5') als Abstreifer oder Schaber für den Schmutz am Boden der Auskehlung (2) dienen, wobei sie diese anhaftenden Reste lockern und die Reinigung dieser Auskehlung (2) ermöglichen.

2. Transportkette für Lebensmittel oder Ähnliches nach Anspruch 1, **dadurch gekennzeichnet, dass** das Steckelement (3) in dem Gelenk zwischen den Kettengliedern annähernd halbkreisförmig ausgeführt ist, wobei diese Form zwei als Abstreifer fungierende scharfe Kanten aufweist.

3. Transportkette für Lebensmittel oder Ähnliches nach Anspruch 1, **dadurch gekennzeichnet, dass** das Steckelement (3') in dem Gelenk zwischen den Kettengliedern annähernd halbzylinderförmig ausgeführt ist, wobei diese Form sich in Längsrichtung erstreckende Rillen oder Auskehlungen (7) aufweist, die eine Vielzahl scharfer Kanten bilden, die dazu benutzt werden, den Boden oder die Oberfläche des Aufnahmeelements abzuschaben.

4. Transportkette für Lebensmittel oder Ähnliches nach Anspruch 1 und 2 oder 3, **dadurch gekennzeichnet, dass** sie zwei Arten von Kettengliedern (1'-1") aufweist, eine mit zwei Gelenkelementen zur Aufnahme und eine mit zwei Gelenkelementen zum Einstecken, die jeweils abwechselnd angeordnet sind.

5. Transportkette für Lebensmittel oder Ähnliches nach einem der vorhergehenden Ansprüchen, **dadurch gekennzeichnet, dass** der Bereich des Aufnahmeelements (9) jedes Kettenglieds (1), das in die bogenförmige obere Rille (8) des angrenzenden Kettenglieds eingepasst ist, ständig im Inneren dieser Rille bleibt, bei jeder Position, die die Kettenglieder in ihrem normalen Betrieb einnehmen können, wobei sie hierbei ihre Mündung geschlossen halten, um den Eintritt von körnigem oder pulverförmigem Schüttgut der Produktion zu vermeiden, wobei sie ermöglichen, dass die Winkelung zwischen den Kettengliedern dem normalen Betrieb der Kette entgegengesetzt sein kann, mit dem Ziel, die Reinigung dieser Kettenglieder mit Hilfe einer Ablenkrolle bei dem Verfahren der Kette in die entgegengesetzte Richtung zu ermöglichen.

6. Transportkette für Lebensmittel oder Ähnliches nach einem der vorhergehenden Ansprüchen, **dadurch gekennzeichnet, dass** eine obere Rille mit bogenförmigem Profil (8) eingerichtet wird, in die das entsprechende Teil des zum angrenzenden Kettenglieds gehörigen Aufnahmeelements (9) eingepasst ist, mit der Besonderheit, dass bei dem normalen Betrieb der Kette, das Aufnahmeteil seine verengte Mündung (8) geschlossen hält, die zu dem komplementären Steckteil an der Oberseite der Kette gehört, um so den Eintritt von körnigem oder pulverförmigem Schüttgut zu vermeiden, wobei sie ermöglichen, dass die Winkelung zwischen den Kettengliedern dem normalen Betrieb der Kette entgegengesetzt sein kann, mit dem Ziel, die Reinigung dieser Kettenglieder mit Hilfe einer Ablenkrolle bei Betrieb der Kette in die entgegengesetzte Richtung zu ermöglichen.

## Revendications

1. Chaîne de convoyage de produits alimentaires et similaires qui demandent des conditions de propreté optimales afin d'éviter la prolifération de bactéries et d'autres microorganismes, composée par plusieurs maillons unis entre eux de façon articulée à travers des moyens de couplage de bouvetage qui permettent un certain angle de basculement entre les maillons et leur couplage direct au moyen d'une glissière; elle est également dotée d'une rainure supérieure (8') entre le couplage mâle du chaînon et son corps (1), où se trouve l'élément de couplage femelle correspondant (9) appartenant au chaînon joint; cette rainure arquée (8) se termine dans un secteur (8') auquel n'accède pas l'élément femelle ci-dessus mentionné qui configure avec ce dernier une chambre à volumétrie variable dans l'articulation de la chaîne, à laquelle peut accéder la saleté entraînée par l'élément femelle, notamment lors du tour inverse de la chaîne; les moyens d'entraînement de celle-ci et surtout l'engrainage correspondant, définissent une grande cannelure inférieure (12) avec l'élément femelle du maillon adjacent, qui s'ouvre, au moins, pendant la trajectoire rectiligne de ces maillons ; alors que le moyen de couplage femelle consiste en une cannelure cylindrique (2) à embouchure étranglée, le moyen de couplage mâle consiste en un segment cylindrique (3-3'-3"), **caractérisé en ce que** le segment cylindrique (3-3'-3") incorpore des arêtes vives (5, 5') à l'intérieur de la cannelure complémentaire, ce qui crée une chambre (6) d'ouverture pour le nettoyage ; d'une autre part, pendant le mouvement de tour ou de basculement relatif entre les chaînons, (1) les arêtes vives (5, 5') agissent comme racleurs ou dissolvants de la saleté déposée au fond de la cannelure (2), détassent les déchets et permettent le nettoyage de cette cannelure (2).

2. Chaîne de convoyage de produits alimentaires et similaires selon la revendication 1, **caractérisée en ce que** l'élément mâle (3) qui se trouve dans l'articulation entre les maillons adopte une forme semblable à un demi-cercle, qui inclut deux arêtes vives qui ont une fonction de racleur.

3. Chaîne de convoyage de produits alimentaires et similaires selon la revendication 1, **caractérisée en ce que** l'élément mâle (3') qui se trouve dans l'articulation entre les maillons adopte une forme essentiellement cylindrique qui incorpore des rainures ou des cannelures longitudinales (7) qui définissent de nombreuses arêtes vives utilisées pour racler le fond ou la surface de l'élément femelle.

4. Chaîne de convoyage de produits alimentaires et similaires selon les revendications 1 et 2 ou 3, **caractérisée en ce qu'**elle incorpore deux types de maillons (1'-1"); l'un d'entre eux inclut deux éléments d'articulation femelle et l'autre deux éléments d'articulation mâle, placés de façon alterne.

5. Chaîne de convoyage de produits alimentaires et similaires selon l'une quelconque des revendications précédentes, **caractérisée en ce que** le secteur de l'élément femelle (9) de chaque maillon (1), qui se trouve dans la rainure supérieure arquée (8) du maillon adjacent, se tient de façon permanente à l'intérieur de cette rainure, dans n'importe quelle position, entre les maillons de la chaîne pendant son fonctionnement normal, en maintenant son embouchure fermée dans le but d'éviter l'accès des produits de la production granulés ou poussiéreux en vrac et en permettant que l'angle entre les maillons soit contraire au fonctionnement normal de la chaîne dans le but de faciliter le nettoyage de ces maillons à l'aide d'un rouleau réfléchissant pendant le déplacement inverse de la chaîne.

6. Chaîne de convoyage selon l'une quelconque des revendications précédentes, **caractérisée en ce qu'**elle est dotée d'une rainure supérieure à profil arqué (8), dans laquelle se trouve la partie correspondante à l'élément femelle (9) appartenant au maillon adjacent ; pendant le fonctionnement normal de la chaîne, l'élément femelle maintient son embouchure étranglée (8) fermée correspondant à l'élément mâle complémentaire sur la face supérieure de la chaîne dans le but d'éviter l'accès des produits de la production granulés ou poussiéreux en vrac et en permettant que l'angle entre les maillons soit contraire au fonctionnement normal de la chaîne dans le but de faciliter le nettoyage de ces maillons à l'aide d'un rouleau réfléchissant pendant le fonctionnement inverse de la chaîne.
